Europäisches Patentamt

European Patent Office

Office européen des brevets

(19)

(11) Numéro de publication: **0 245 137**
**B1**

(12) **FASCICULE DE BREVET EUROPEEN**

(45) Date de publication du fascicule du brevet:
03.01.90

(51) Int. Cl.⁴: **F16H 3/74**

(21) Numéro de dépôt: **87400807.1**

(22) Date de dépôt: **09.04.87**

(54) Système mécanique de conversion de couple continue étagée.

(30) Priorité: **24.04.86 FR 8605958**

(43) Date de publication de la demande:
**11.11.87 Bulletin 87/46**

(45) Mention de la délivrance du brevet:
**03.01.90 Bulletin 90/1**

(84) Etats contractants désignés:
**DE ES GB IT**

(56) Documents cités:
**EP-A- 0 014 578**
**DE-A- 3 424 421**
**FR-A- 382 243**
**GB-A- 473 677**

(73) Titulaire: **Combastet, Michel, 25, rue du Faubourg Saint-Honoré, F-75008 Paris(FR)**

(72) Inventeur: **Combastet, Michel, 25, rue du Faubourg Saint-Honoré, F-75008 Paris(FR)**

(74) Mandataire: **Armengaud Aîné, Alain, Cabinet ARMENGAUD AINE 3 Avenue Bugeaud, F-75116 Paris(FR)**

**Description**

La présente invention concerne un système convertisseur de couple mécanique.

Depuis la fin de la deuxième guerre mondiale, il y a plus de quarante ans, on a étudié des convertisseurs de couple destinés à remplacer les boîtes de vitesses classiques, à jeux d'engrenages. En effet, les convertisseurs de couple offrent l'avantage d'utiliser au maximum les performances d'un moteur en maintenant ce dernier plus longtemps au régime où il donne son couple optimum. A l'heure actuelle, il existe des convertisseurs de couple hydrauliques et mécaniques.

Le présent titulaire a été amené à étudier, il y a quelques années, un convertisseur de couple simple, robuste, d'un prix raisonnable et d'un entretien facile. La description de base d'un tel convertisseur de couple mécanique se trouve dans le brevet français No 7 531 066, publié sous le numéro 2 327 454, et dans le certificat d'addition No. 7 905 143 publié sous le numéro 2 450 385.

Un convertisseur de couple selon cette technique antérieure agit par rétroaction différentielle, et il se compose de deux différentiels: la cage, à l'entrée du premier différentiel, reçoit la puissance à transmettre, et la cage à la sortie du second différentiel entraîne l'organe récepteur, les deux différentiels ayant leurs arbres planétaires accouplés deux par deux, d'un même côté, par deux trains d'engrenages solidaires desdits arbres.

On connaît par ailleurs, par GB-A 473 677 un dispositif coupleur-variateur comportant deux différentiels montés coaxiaux et tête-bêche et dans lequel les mouvements des planétaires homologues sortent du côté opposé des arbres porte-cage. Un tel dispositif conformément au préambule de le revendication 1 comprend un arbre d'entrée coaxial à l'arbre de sortie et il est en outre pourvu d'un frein. Il transmet le couple que par un effet de frottement et ne constitue donc pas une transmission de puissance.

La présente invention se propose d'apporter des perfectionnements à un tel type de convertisseur pour réaliser une véritable transmission de puissance permettant d'obtenir une variation de couple continue sans glissement, un contrôle d'étagement de plusieurs rapports fixes et une prise directe entre l'entrée et la sortie de puissance.

A cet effet, l'invention concerne un système convertisseur de couple mécanique agissant par rétroaction différentielle continue et étagement de rapports fixes, comportant deux différentiels, la cage du premier différentiel recevant la puissance de l'arbre d'entrée du mouvement moteur et la cage du second différentiel entraînant l'arbre de sortie du système, l'arbre d'entrée étant coaxial à l'arbre de sortie, les deux différentiels ayant leurs quatre planétaires accouplés deux par deux, et le mouvement des planétaires de chaque différentiel sortant d'un même côté, opposé à chaque arbre planétaire appartenant à chaque cage, caractérisé en ce que les deux différentiels sont montés sur des axes parallèles et en ce qu'on prévoit:

– un dispositif permettant: d'obtenir un étagement de rapports fixes entre les vitesses de rotation à l'entrée et à la sortie; une rotation de l'arbre de sortie du système convertisseur dans un sens ou dans l'autre; de désolidariser l'arbre de sortie pour obtenir un point mort et de bloquer la rotation de l'arbre de sortie et

– des moyens pour obtenir une prise directe entre l'arbre d'entrée et l'arbre de sortie par solidarisation de l'arbre d'entrée et de l'arbre de sortie du système et désaccouplement de la liaison entre les deux différentiels.

Selon une caractéristique de l'invention, la solidarisation des arbres d'entrée et de sortie peut être obtenue en rendant l'arbre d'entrée solidaire de l'arbre planétaire du différentiel d'entrée, et de l'arbre de sortie du système convertisseur.

Selon une autre caractéristique de cette invention, la liaison entre l'arbre solidaire de la cage de sortie du second différentiel ou différentiel de sortie, et l'arbre de sortie de la puissance du système, coaxial à l'arbre d'entrée du mouvement, peut être assurée par un ou plusieurs jeux d'engrenages à commande étagée, afin d'obtenir: l'étagement de rapports fixes entre les vitesses de rotation à l'entrée et à la sortie; la rotation de l'arbre de sortie dans un sens ou dans l'autre; le point mort; et le blocage de la rotation de l'arbre de sortie du système convertisseur.

Selon encore une autre caractéristique de cette invention, les deux arbres planétaires du premier différentiel, ou différentiel d'entrée sont reliés respectivement aux deux arbres planétaires du second différentiel par l'intermédiaire de deux engrenages de démultiplication appropriée.

D'autres caractéristiques et avantages de cette invention ressortiront de la description faite ci-après en référence au dessin annexé, qui en illustre deux exemples de réalisation dépourvus de tout caractère limitatif. Sur le dessin:

– la Figure 1 est une vue schématique d'un premier exemple de réalisation de l'invention; et,

– la Figure 2 est une vue similaire à la Figure 1, représentant un second exemple de réalisation.

En se référant au dessin, on voit que le convertisseur de couple selon l'invention est essentiellement constitué d'un variateur de couple à variation continue sans glissement, composé de deux différentiels $D_1$ et $D_2$, appelés respectivement différentiel d'entrée et différentiel de sortie, accouplés l'un à l'autre, comme on le verra ci-après, par des engrenages démultiplicateurs, et de dispositifs d'étagements de rapports fixes, d'inversion, de point mort et de blocage de la marche de l'arbre de sortie, désignés dans son ensemble par la référence B.

Comme on le voit sur le dessin, chaque différentiel $D_1$, $D_2$ se caractérise par l'unicité de l'axe des organes d'entrée et de sortie du mouvement: la cage et les deux planétaires. La cage $C_1$ du différentiel d'entrée $D_1$ est en relation avec le mouvement extérieur par l'arbre d'entrée du mouvement 10, qui en est solidaire. Cette cage $C_1$ porte, comme connu, les satellites 16, 18, et les planétaires 12, 14 du différentiel d'entrée sont montés sur des arbres planétaires 30, 32, concentriques et coaxiaux, disposés de manière que leurs mouvements sortent du côté opposé à l'arbre 10 solidaire de la cage $C_1$.

On retrouve la même disposition, en ce qui concerne le différentiel de sortie $D_2$. Sa cage $C_2$ est solidaire de l'arbre de sortie du mouvement 50, et elle porte, comme connu, les satellites 26, 28. Les planétaires 22, 24 du différentiel de sortie $D_2$ sont montés sur des arbres planétaires 40, 42, concentriques et coaxiaux, disposés de manière que leurs mouvements entrent du côté opposé à l'arbre de sortie 50.

Les deux arbres planétaires 30, 32 du différentiel d'entrée $D_1$ sont reliés respectivement aux deux arbres planétaires 40, 42 du différentiel de sortie $D_2$ à l'aide d'engrenages 48, 52, 54, 56, de démultiplication déterminée.

Selon une caractéristique essentielle de cette invention, l'arbre d'entrée du mouvement 10 est coaxial à l'arbre de sortie de la puissance 20 du système convertisseur de couple. A cet effet, l'arbre de sortie du mouvement 50 du différentiel de sortie $D_2$ est muni de deux pignons 34, 36, pouvant venir respectivement en prise avec des pignons 44, 46 coulissant sur les cannelures de l'arbre de sortie de la puissance 20, aligné avec l'arbre d'entrée 10. Un pignon d'inversion du sens du mouvement 38 est intercalé entre les pignons 46 et 36.

Le dispositif B, constitué des pignons 34, 36, 38, 44, 46, permet donc de réaliser les fonctions suivantes:
— étagement de rapports fixes entre les vitesses de rotation à l'entrée et à la sortie;
— rotation de l'arbre de sortie 20 du système convertisseur dans un sens ou dans l'autre : dans ce but, les pignons 44, 46 sont montés sur un arbre cannelé 60, pouvant se déplacer le long de l'arbre 20 sous la commande d'un moyen manuel, tel que la fourchette 58, de tout autre moyen approprié : mécanique, électrique, électro-magnétique, pneumatique, hydraulique ou électronique ou de la combinaison de tous ces moyens,
— désolidarisation de l'arbre de sortie 20, pour obtenir un point mort;
— blocage de la rotation de l'arbre de sortie de la puissance 20.

En outre, le convertisseur selon l'invention permet d'obtenir une prise directe entre l'arbre d'entrée 10 et l'arbre de sortie de la puissance 20. A cet effet, on prévoit des moyens (non représentés) assurant:
— d'une part, une solidarisation de l'arbre d'entrée 10, de l'arbre planétaire 30 du différentiel d'entrée D1 et de l'arbre de sortie de la puissance 20;
— d'autre part, un désaccouplement de la liaison entre les deux diffé rentiels $D_1$ et $D_2$.

Ces moyens peuvent être réalisés sous la forme d'un embrayage, mécanique, électromagnétique ou hydraulique, à disques ou à crabots, ou par un mécanisme à glissement de pignons.

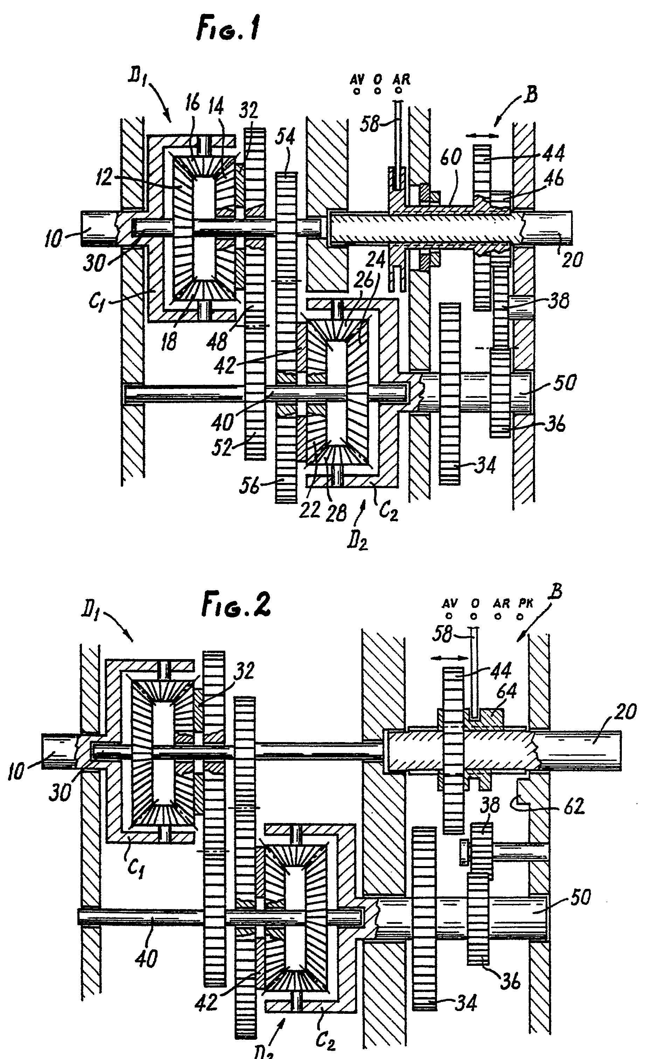

La variante illustrée par la Figure 2 diffère de l'exemple de réalisation représenté sur la Figure 1 uniquement par la réalisation du boîtier B, plus complexe, et par le fait que le pignon inverseur 38 est décentré par rapport aux pignons 34, 36 et 44. Le blocage de la rotation de l'arbre de sortie de la puissance 20 est obtenu par les deux ergots 62, 64, lorsque ceux-ci sont en prise l'un contre l'autre.

On comprend, à la lecture de la description qui précède, que le convertisseur de couple selon l'invention permet d'obtenir normalement un sens de rotation de l'arbre de sortie de la puissance 20 identique à celui de l'arbre d'entrée du mouvement 10, et d'assurer un mouvement en sens inverse, ou marche arrière, plus ou moins démultiplié, par variation continue ou par étages.

Les applications possibles du convertisseur de couple selon cette invention sont notamment les suivantes: transmission du mouvement dans les machines outils; transmission de couples ou de puissance dans les véhicules, ou moyens de transport terrestre, maritime ou aérien, dans les appareils de levage, de manutention, de forage, etc., réalisation de servo-mécanismes et de micro-mécanismes, appareils limiteurs de couple, accouplement de groupes de production d'énergie.

**Revendications**

1. Système convertisseur de couple mécanique agissant par rétroaction différentielle continue et étagement de rapports fixes, comportant deux différentiels ($D_1$, $D_2$), la cage ($C_1$) du premier différentiel ($D_1$) recevant la puissance de l'arbre d'entrée (10) du mouvement moteur et la cage ($C_2$) du second différentiel ($D_2$) entraînant l'arbre de sortie (20), les deux différentiels ayant leurs quatre planétaires accouplés deux par deux (12 à 22; 14 à 24), et le mouvement des planétaires (12, 14, 22, 24) de chaque différentiel sortant d'un même côté, opposé à chaque arbre (10, 50) solidaire de chaque cage ($C_1$, $C_2$) caractérisé en ce que les deux différentiels ($D_1$, $D_2$) sont montés sur des axes parallèles en ce qu'on prévoit:
   — un dispositif (B) permettant: d'obtenir un étagement de rapports fixes entre les vitesses de rotation à l'entrée et à la sortie; une rotation de l'arbre de sortie (20) du système convertisseur dans un sens ou dans l'autre; de désolidariser l'arbre de sortie pour obtenir un point mort et de bloquer la rotation de l'arbre de sortie et
   — des moyens pour obtenir une prise directe entre l'arbre d'entrée (10) et l'arbre de sortie (20) du système par solidarisation de l'arbre d'entrée (10) et de l'arbre de sortie (30) et désaccouplement de la liaison entre les deux différentiels.

2. Système convertisseur de couple selon la revendication 1, caractérisé en ce que la solidarisation des arbres d'entrée (10) et de sortie (20) est obtenue en rendant l'arbre d'entrée (10) solidaire de l'arbre planétaire (30) du différentiel d'entrée ($D_1$), et de l'arbre de sortie (20) du système.

3. Système convertisseur de couple selon la revendication 1, caractérisé en ce que la solidarisation des arbres d'entrée (10) et de sortie (20) est obtenue en solidarisant l'un et l'autre les planétaires (12, 14) du différentiel d'entrée ($D_1$) avec l'arbre de sortie (20).

4. Système convertisseur de couple selon l'une quelconque des revendications 1 à 3, caractérisé en ce que lesdits moyens permettant d'obtenir la prise directe sont constitués par un embrayage, mécanique, électro-magnétique ou hydraulique, à disques ou à crabots, ou par un mécanisme à glissement de pignons.

5. Système convertisseur de couple selon l'une quelconque des revendications précédentes, caractérisé en ce que la liaison entre l'arbre (50) solidaire de la cage (C₂) du différentiel de sortie (D₂) et l'arbre de sortie de la puissance (20) du système, coaxial à l'arbre d'entrée du mouvement (10) est assurée par un ou plusieurs jeux d'engrenages (34, 36, 38, 44, 46), à commrade étagée, pour obtenir l'étagement de rapports fixes entre les vitesses de rotation à l'entrée et à la sortie, la rotation de l'arbre de sortie dans un sens ou dans l'autre, ledit point mort et le blocage de la rotation de l'arbre de sortie du système.

6. Système convertisseur de couple selon l'une quelconque des revendications précédentes, caractérisé en ce que les deux arbres planétaires (30, 32) du différentiel d'entrée (D₁) sont reliés respectivement aux deux arbres planétaires (40, 42) du différentiel de sortie (D₂) par l'intermédiaire d'engrenages (48, 52, 54, 56) de démultiplication appropriée,

7. Système convertisseur de couple selon l'une quelconque des revendications précédentes, caractérisé en ce que le dispositif (B) est à commande manuelle, du type pignon balladeur (44, 46) sur arbre cannelé (60), actionné par une fourchette de commande (58).

8. Système convertisseur de couple selon l'une quelconque des revendications 1 à 6, caractérisé en ce que le dispositif (B) est à commande assistée par tout moyen électrique, hydraulique, électromagéntique, pneumatique, électronique.

**Patentansprüche**

1. Vorrichtung zur mechanischen Drehmomentumwandlung mit kontinuierlicher Differentialrückkopplung und abgestuften festen Übersetzungsverhältnissen, umfassend zwei Differentiale (D₁, D₂), wobei das Gehäuse (C₁) des ersten Differentials (D₁) die Leistung der Antriebswelle (10) der Antriebsbewegung aufnimmt und das Gehäuse (C₂) des zweiten Differentials (D₂) die Abtriebswelle (20) der Vorrichtung antreibt, die Antriebswelle (10) zur Abtriebswelle (20) koaxial ist, die beiden Differentiale ihre vier Planetenräder jeweils paarweise (12 zu 22; 14 zu 24) gekuppelt haben, und die Bewegung der Planetenräder (12, 14) jedes Differentials auf ein- und derselben Seite abgenommen wird, und zwar entgegengesetzt zu jeder Welle (10, 50), die mit jedem Gehäuse (C₁, C₂) verbunden ist, dadurch gekennzeichnet, daß die beiden Differentiale (D₁, D₂) auf parallelen Achsen angeordnet sind und daß ferner vorgesehen sind:

– eine Vorrichtung (B), die es ermöglicht, eine stufenartige Anordnung in festen Stufen zwischen den Drehgeschwindigkeiten am Eingang (Antrieb) und am Ausgang (Abtrieb) zu erhalten; ferner eine Drehung der Abtriebswelle (20) der Drehmomentumwandlungsvorrichtung in der einen oder in der anderen Richtung zu erhalten; die Abtriebswelle zu trennen, um einen Leerlauf zu erhalten, und die Drehung der Abtriebswelle zu blockieren, und

– Einrichtungen zur Herstellung einer direkten Kupplung zwischen der Antriebswelle (10) und der Abtriebswelle (20) der Vorrichtung durch Verbindung der Antriebswelle (10) und der Abtriebswelle (20) und Auskupplung der Verbindung zwischen den beiden Differentialen.

2. Vorrichtung zur Drehmomentumwandlung nach Anspruch 1, dadurch gekennzeichnet, daß die Verbindung zwischen der Antriebswelle (10) und der Abtriebswelle (20) dadurch hergestellt wird, daß die Antriebswelle (10) mit der Planetenwelle (30) des Differentialgetriebes (D₁) und mit der Abtriebswelle (20) der Vorrichtung verbunden ist.

3. Vorrichtung zur Drehmomentumwandlung nach Anspruch 1, dadurch gekennzeichnet, daß die Verbindung zwischen der Antriebswelle (10) und der Abtriebswelle (20) dadurch hergestellt wird, daß sowohl das eine wie das andere der Planetenzahnräder (12, 14) des Eingangsdifferentials (D₁) mit der Abtriebswelle (20) verbunden sind.

4. Vorrichtung zur Drehmomentumwandlung nach einem der Ansprüche 1 bis 3, dadurch gekennzeichnet, daß die Einrichtungen zur direkten Kupplung aus einer elektromagnetischen oder hydraulischen, mechanischen Scheiben- oder formschlüssigen Kupplung oder aus einem Ritzelgleitgetriebe bestehen.

5. Vorrichtung zur Drehmomentumwandlung nach einem der vorhergehenden Ansprüche, dadurch gekennzeichnet, daß die Verbindung zwischen der mit dem Gehäuse des Ausgangsdifferentials (D₂) verbundenen Welle (50) und der zur Antriebswelle (10) der Bewegung koaxialen Abtriebswelle für die Leistung (20) der Vorrichtung gewährleistet wird durch einen oder mehrere Satz Zahnräder (34, 36, 38, 44, 46) mit gesteuerter Abstufung, um eine Abstufung der Übersetzungsverhältnisse in festen Stufen zwischen den Drehgeschwindigkeiten am Eingang und am Ausgang, die Drehung der Abtriebswelle in der einen oder in der anderen Richtung, den Leerlauf und die Blockierung der Drehung der Abtriebswelle der Vorrichtung zu erhalten.

6. Vorrichtung zur Drehmomentumwandlung nach einem der vorhergehenden Ansprüche, dadurch gekennzeichnet, daß die beiden Planetenwellen (30, 32) des Eingangsdifferentials (D₁) jeweils mit den beiden Planetenwellen (40, 42) des Ausgangsdifferentials (D₂) mit Hilfe von Zahnrädern (48, 52, 54, 56) geeigneter Übersetzung verbunden sind.

7. Vorrichtung zur Drehmomentumwandlung nach einem der vorhergehenden Ansprüche, dadurch gekennzeichnet, daß die Vorrichtung (B) als manuell gesteuerte Vorrichtung vom Typ eines mit Hilfe einer Schaltgabel (58) zu betätigenden Schieberades (44, 46) auf einer Keilwelle (60) ausgebildet ist.

8. Vorrichtung zur Drehmomentumwandlung nach einem der vorhergehenden Ansprüche, dadurch gekennzeichnet, daß die Vorrichtung (B) durch elektrische, hydraulische, elektromagnetische, pneumatische oder elektronische Einrichtungen gesteuert wird.

**Claims**

1. Mechanical torque converter system acting by continuous differential feedback and staging of fixed ratios, comprising two differentials (D₁, D₂), the cage (C₁) of the first differential (D₁) receiving the power of the input shaft (10) from the engine movement and the cage (C₂) of the second differential (D₂) driving the output shaft (20) of the system, the input shaft (10) being coaxial with the output shaft (20), the two differentials having their four bevel wheels coupled together two-by-two (12 with 22; 14 with 24), and the movement of the bevel wheels (12, 14) of each differential leading out on the same side opposite to each shaft (10, 50) integral with each cage (C₁, C₂), characterized in that the two differentials (D₁, D₂) are mounted on parallel axes and in that there are provided;

 – a device (B) marking possible: the obtaining of a staging of fixed ratios between the rotational speeds at the input and at the output; a rotation of the output shaft (20) of the converter system in one direction or the other; a disengagement of the output shaft to obtain a neutral position and a blocking of the rotation of the output shaft, and

 – means for obtaining a direct engagement between the input shaft (10) and the output shaft (10) and the output shaft (20) of the system by engagement of the input shaft (10) and the output shaft (20) and decoupling of the connection between the two differentials.

2. Torque converter system according to Claim 1, characterized in that the engagement of the input shaft (10) and output shaft (20) is achieved by making the input shaft (10) rigid with the bevel wheel shaft (30) of the input differential (D₁) and with the output shaft (20) of the system.

3. Torque converter system according to Claim 1, characterized in that the engagement between the input shaft (10) and output shaft (20) is achieved by locking both the bevel wheels (12, 14) of the input differential (D₁) to the output shaft (20).

4. Torque converter system according to any one of Claims 1 to 3, characterized in that said means permitting direct engagement to be obtained are constituted of a mechanical, electromagnetic or hydraulic clutch, a clutch comprising discs or dogs, or by a mechanism having pinion sliding.

5. Torque converter system according to any one of the preceeding Claims, characterized in that the connection between the shaft (50) integral with the cage (C₂) of the output differential (D₂) and the output shaft for the power (20) of the system, coaxial with the input shaft of the movement (10), is assured by one or more sets of gears (34, 36, 38, 44, 46), with staged control, for achieving the staging of fixed ratios between the rotational speeds at the input and at the output, the rotation of the output shaft in one direction or in the other, the neutral position and the rotational blocking of the output shaft of the system.

6. Torque converter system according to any one of the preceeding Claims, characterized in that the two bevel wheel shafts (30, 32) of the input differential (D₁) are connected respectively to the two bevel wheel shafts (40, 42) of the output differential (D₂) through the intermediary of gears (48, 52, 54, 56) of suitable reduction ratio.

7. Torque converter system according to any one of the preceeding Claims, characterized in that the device (B) is manually controlled, of the type having a sliding pinion (44, 46) on a splined shaft (60), actuated by a control fork (58).

8. Torque converter system according to any one of Claims 1 to 6, characterized in that the device (B) has a control assisted by any electrical, hydraulic, electromagnetic, pneumatic, or electronic means.

FIG.1

FIG.2